# EUROPÄISCHE PATENTSCHRIFT

(11) **EP 4 445 036 B1**
(45) Veröffentlichungstag und Bekanntmachung des Hinweises auf die Patenterteilung: **11.02.2026**
(21) Anmeldenummer: 22834947.8
(22) Anmeldetag: 08.12.2022
(51) Int. Cl.: F16D 55/226

(54) **KRAFTFAHRZEUGSCHEIBENBREMSE MIT BALG-MANSCHETTE ZWECKS ABDICHTUNG EINER BOLZEN-FÜHRUNGSEINRICHTUNG UND BALG-MANSCHETTE**
AUTOMOTIVE DISC BRAKE WITH BELLOWS BOOT FOR SEALING A BOLT GUIDE AND BELLOWS BOOT
FREIN À DISQUE AUTOMOBILE AVEC BOTTE À SOUFFLET POUR SCELLER UN GUIDE DE BOULON ET BOTTE À SOUFFLET

(30) Priorität: 08.12.2021 EP 21213176; 04.05.2022 DE 102022204394
(43) Veröffentlichungstag der Anmeldung: 16.10.2024
(73) Patentinhaber: AUMOVIO Germany GmbH, 60488 Frankfurt am Main (DE)
(72) Erfinder: LEIDECKER, Norbert, 30175 Hannover (DE); RAUSCH, Jochem, 30175 Hannover (DE); ZIMNOCH, Frederic, 30175 Hannover (DE); WEISE, Stefanie, 30175 Hannover (DE); LANKES, Christian, 30175 Hannover (DE)
(74) Vertreter: Aumovio Corporation
(86) Internationale Anmeldenummer: PCT/EP2022/085052
(87) Internationale Veröffentlichungsnummer: WO 2023/104993

(56) Entgegenhaltungen:
- CA-A- 1 109 404
- JP-A- 2003 120 725
- US-A- 5 810 122
- US-A1- 2003 015 381
- US-A1- 2013 161 134

## Beschreibung

Die Erfindung betrifft eine Kraftfahrzeugscheibenbremse mit einem Bremssattelgehäuse, mit einem Bremshalter, mit einem Halte- und Führungssystem zur drehfesten sowie axial verschieblichen Führung des Bremssattelgehäuses in Relation zum Bremshalter, mit einem am Bremssattelgehäuse fest angeordneten Bolzen als Komponente einer Führungseinrichtung, sowie mit Bohrung im Bremshalter zwecks axial gerichtet bewegbarer Führung des Bremssattelgehäuse über den Bolzen anhand der Führungseinrichtung, und wobei eine Manschette mit einem Balg zur flexiblen Abdichtung eines Spalts zwischen Bolzen und Bremshalter vorliegt.

Faustsattelbremsen (auch Schwimmsattelbremsen genannt) mit bremsgehäusefest allokierten Führungsbolzen in axial beweglich arrangierter Gleitführungsanordnung in Aufnahmebohrungen eines fahrzeugfesten Bremshalters (sog. Pin-Slider-Bauweise) sind grundsätzlich bekannt.

Ein vorteilhaft besonders einfach und auch leicht montierbarer hydraulischer Bremssattel des vorbildlichen Typs geht aus der DE 695 06 897 T2 hervor. Die Bolzen-Führungseinrichtung des Faustsattels bzw. Schwimmsattels ("Pin-Slider-Bremssattel") dient dazu, das axial verschieblich gelagert vorgesehene Metallguss-Bremssattelgehäuse in Relation zu dem Bremshalter unter automobiler Komplexbeanspruchung (hohe Zuspann- + Bremskräfte, Verschmutzung, Temperaturintervall zwischen minimal ca. - 40°C bis maximal ca. 900°C, Erschütterungen etc.) möglichst stabil sowie leichtgängig verschiebbar sowie dauerfest und wartungsarm zu lagern, damit Fehler wie Schiefstellung bzw. Verkeilung ausgeschlossen sind, nachdem dies einen Bremsausfall verursachen könnte.

Anhand DE 695 06 897 T2 erhellt ein Bolzenführungssystem, wobei ein erster Sitz zusätzlich zur ersten Bohrung durch das Innere eines Ringes aus Elastomermaterial gebildet ist, der in der Verlängerung des ersten Abschnitts der ersten Bohrung so untergebracht ist, daß er zu diesem ersten Abschnitt beabstandet ist, und daß die zweite Bohrung auf ihrer gesamten Länge einen Durchmesser aufweist, der gleich dem kleinen Durchmesser ist. Damit sind unterschiedliche Führungsabschnitte in Verbindung mit zwei unterschiedlichen Bolzenaufnahmebohrungen in einem Bremshalter in Verbindung mit zwei identisch gestalteten Bolzen vorgeschlagen. Desweiteren geht eine erste Bohrung zur Führungsbolzenaufnahme von einer Zylinderform aus, die abgestuft gestaltet ist, und in deren Inneres ein starrer Ring mit einem Innendurchmesser D1 eingepresst ist, der einen ersten Abschnitt S1 bedeckt und formt. Im Übrigen ist ein erster Sitz zusätzlich zur ersten Bohrung durch das Innere eines Rings aus Elastomermaterial gebildet, der in der Verlängerung des ersten Abschnitts S 1 der ersten Bohrung so untergebracht ist, dass er zu diesem ersten Abschnitt S 1 benachbart und von dem zweiten Abschnitt S2 beabstandet ist. Ferner stellt der Ring für die Stange eine Zentrierwirkung sicher, die es ermöglicht, sie in eine optimale Stellung zu bringen und das Vibrieren des Bremssattels zu dämpfen. Der elastomere Ring verfügt über einen angeformten manschettenartigen Balg der einen Spalt übergreift.

Nach dem Lösen einer Kraftfahrzeugscheibenbremse besteht aus Klimaschutzgründen verstärkt ein aktuell nachgefragter betrieblicher Sonderwunsch, dass ein Bremssattelgehäuse möglichst zeitgleich sowie zuverlässig mit sämtlichen Reibbelägen rasch in eine Bremslüftstellung/Bremsbereitschaftsstellung rückverlagert, und wobei die Reibbeläge möglichst mit ausreichend Haarspalt-Abstand von einer Bremsscheibe distanziert sind, um unerwünschte Restschleifmomente im normalen Fahrbetrieb auszuschließen. Insbesondere eine saubere Rückstellung des indirekt betätigten Reibbelags der gattungsgemäßen Faustsattelbremse kann bei gesteigerter Anspruchshaltung problembehaftet sein.

Die hydraulische pin-slider-Scheibenbremse nach dem Vorbild der nicht vorveröffentlichten US 2022/0018406 A beschreibt zwecks Rückstellung einen hydraulischen Bremskolben mit roll-back-Dichtung in Verbindung mit einer Manschette umfassend mehrere, quer zu einer axialen Bolzen-Verschiebungsrichtung erstreckte, Querrippen und Querrillen.

Die JP 2003 120 725 A betrifft eine Manschette 26 und beschreibt zum Zurückziehen eines Führungsbolzens 10 den elastisch rückverformenden, ringförmigen Lippenabschnitt 30c, 42c am Führungsabschnitt.

Der Erfindung liegt das Problem zugrunde, eine weiterentwickelte Kraftfahrzeugscheibenbremse der eingangs genannten Pin-Slider-Gattung (Faustsattel bzw. Schwimmsattelbremse) mit besonders wartungsfrei sowie effizient verbesserter Rückstellwirkung für einen indirekt betätigten Reibbelag bei universeller Brauchbarkeit, d.h. unabhängig von einer Aktuatorbindung vorzulegen.

Ein begleitendes Ziel der Erfindung besteht in diesem Zusammenhang darin, eine Bremskomponentenherstellung sowie deren Montage besonders zukunftssicher zu verbessern wie insbesondere einen Herstellung- und Montageprozess von Komponenten rationell - nämlich insbesondere auch besonders automatisierungsgerecht - weiterzuentwickeln.

Die Probleme werden erfindungsgemäß anhand der Merkmale des Patentanspruchs 1 gelöst. Die Manschette 10,110 ist zum Lösen der Scheibenbremse 1 zur Erzeugung einer Lösebewegung des Bremssattelgehäuses 5 von dem Bremshalter 4 ausgebildet, so dass besonders beispielhaft auf eine gesonderte Rückstellfedermontage verzichtet werden kann. Demzufolge ist einerseits eine Komponentenmontage (Einschubmontage) einfach möglich, und gleichzeitig wird ein Rückstellbestreben infolge gelöster Scheibenbremse 1 automatisch elastisch unterstützt.

Die Manschette 10,110 ermöglicht gemäß vorteilhafter Weiterbildung der Erfindung eine federartige Rückstellunterstützung respektive eine Aufprägung einer Rückstellwirkung zwecks Erzeugung einer Lösebewegung beim Bremsenlösen in Verbindung mit einem hochlastfähigen Trag- und Dämpfungsverhalten, indem die Manschette 10,110 zur Erzeugung einer Rückstellfunktion aus Elastomer mit selbständigem Formgedächtnis gefertigt ist.

Eine erfindungsgemäße Balg-Manschette 10,110 gestaltet sich gemäß einer anderen vorteilhaften Weiterbildung der Erfindung konstruktiv besonders einfach, wenn die Rückstellfunktion durch Rippen 20,120 der Manschette 10,110 mit einer definierten axialen Steifigkeit des Elastomers erzeugt ist, und wobei die elastische Rückverformung der, zwischen Bremshalter 4 und Bremssattelgehäuse 5 eingespannten, Balg-Manschette 10,110 bei gelöster Bremse über einen gehäusefesten Bolzen 8 übertragen wird.

Die Manschette 10,110 ermöglicht gemäß einer anderen vorteilhaften Weiterbildung der Erfindung im Betrieb eine besonders praxisgerecht umlaufende Benetzung mit Gleit-Schmiermittel ohne Abstreiftendenz, wie auch eine erleichterte Lösebewegung (leichter Übergang zwischen Haftreibung und Gleitreibung) wenn die Rippen 20,120 mit Nuten 21,121 abwechseln, die Rippen 20,120 gleichmäßig, glatt d.h. parallel, auf dem Bolzen 8 aufliegen und parallel zur Achse des Bolzens 8 angeordnet sind. Die Nuten 20,120 und Rippen 21,121 im Führungsabschnitt 19,119 korrespondieren miteinander (wechseln am Teilkreisumfang abwechselnd ab) und es wird eine axial zueinander relativ verschiebliche Führungsfunktion wie auch eine Lagerfunktion der Bauteile (Bremshalter 4 zur Lagerung des relativverschieblichen Bremssattelgehäuse 5) dargeboten.

Der Lösebewegungsantrieb wird dabei durch die Manschette 10,110 dadurch erzeugt, dass sich die Rippen 20,120 bei Bremsbetätigung (infolge von Bolzenverschiebung) elastisch biegen ergo gewissermaßen durch Mitnahmeeffekte federelastisch vorgespannt werden. Mit Lösen der Scheibenbremse 1 wird mikroelastische Verspannung anhand elastischer Rückverformung (Formgedächtnis der Manschette mit Führungsabschnitt 19,119) abgebaut, d.h. automatisch gelöst und dadurch eine relative Rückstellbewegung über die Bolzen 8 auf das Bremssattelgehäuse 5 ausgelöst, oder zumindest unterstützt. Durch simple Passung zwischen Rippen 20,120, Nuten 21,121 und Bolzendurchmesser ist eine elastische Schlepp- bzw. Vorspannfederwirkung in Verbindung mit Rückstellfederwirkung zwischen Manschette 10,110 und Bolzen 8 dargestellt, ohne dass es dafür zwingend einer ganz besonderen Manschettenstrukturierung, Formgebung noch Sonderwulstaufbauten bedarf. Denn das erfindungsgemäße relative Biegen der Rippen 20,120 beim Bremsen ist einfach und praxisgerecht darstellbar, ohne dass die Rippen 20,120 besonders verletzlich filigran gestaltet wären (Haltbarkeit und Tragfähigkeit ist mit Filigranaufbau eingeschränkt) noch, dass die Rippen 20,120 zwingend mit einer aufwändigen Sonderprofilierung hergestellt werden müssten.

Die Erfindung hat mithin erstmals erkannt, dass durch Scherkraft bzw. Querkraft elastisch verformbare sowie axial flächig, glatt erstreckte (Block-)Rippen bei einem vergleichsweise hohen Bolzentraganteil - im Verhältnis zu einem benachbarten Nutabschnitt (etwa vergleichbar einem elastischen Rückstellverformungsverhalten von positiv auf einer Straße eingreifenden Profilstollenanteilen von angetriebenen oder gebremsten Fahrzeugreifen) geeignet sein können, anhand elastischer Entspannung nach Entlastung einen selbsttätigen sowie automatischen Rückstelleffekt auszulösen.

Weiterhin lässt sich durch eine geeignete Formgebung sowie Profilierung im Wechsel (mit beispielsweise anteilig überwiegendem Rippenanteil im kooperierenden Kontakt der Schnittstellenabschnitte zwischen der elastomeren Manschette 10,110 und dem metallischem Bolzen 8 eine umlaufende Verteilung von Gleitschmiermittel im Bolzenführungsabschnitt sicherstellen oder zumindest durch eine automatisierte Mikropumpwirkung infolge Bremsbetrieb begünstigen, ohne Gefahr, dass in die Kavitäten (Nuten) einmal eingetragener Schmierstoff sukzessive vollständig abgezogen sowie in Kavitätenreservoirs gewissermaßen dauerhaft gefangen verbleibt. Gleichzeitig ist die Effizienz des Führungssystems der Bremse beim Betätigen und beim Lösen anhand der verbesserten Schmiereffizienz/Schmiermittelbenetzung vorteilhaft unterstützt. Wechselweise Kompression und Entspannung infolge von Querkraftbeaufschlagung (Umfangskraftwirkung) mit Kompressionsbeaufschlagung des Führungsabschnitts 19,119 der Balg-Manschette 10,110 führt dabei in erster Linie zu einem fortgesetzten sowie automatischen mikropumpenartigen Schmierstoffaustausch zwischeneinander benachbarten Längsrippen und Längsnuten, und eine dosierte elastische Balgdeformation während einer Bremsbetätigung kann diese Pumpprozesse zusätzlich positiv unterstützen.

Vorteilhafterweise sind Rippen 20,120 und Nuten 21,121 zueinander diametral derart gegenüberliegend arrangiert, dass infolgedessen überhöhtes Bolzenspiel wie auch eingeschränktes Lasttragverhalten sicher ausgeschlossen sind. Anordnung von paarweise zueinander genau diametral gegenüberliegenden Nutenpaaren, oder Rippenpaaren, sind erfindungsgemäß ausgeschlossen. Schwingungen zwischen den Bauteilen des Bremssattelgehäuse 5 und des Bremshalters 4 lassen sich in vorteilhafter Weiterbildung der Erfindung zuverlässig dämpfen, wenn die Manschette 10,110 über eine ungerade Anzahl an Nuten 20,120 und Rippen 21,121 verfügt. Demzufolge sind Schwingungen über die Manschettenführung gedämpft wie auch metallische Klappergeräusche vermieden. Das gewonnene Dämpfungsverhalten ist durch die ungerade gestaltete Rippenanzahl sicher d.h. insbesondere unabhängig von einer Winkelpositionierung zwischen Manschette und Bohrung (d.h. auch Einstellmaßnahme wie laut DE 695 06 897 T2 gefordert sind erfindungsgemäß rationalisiert).

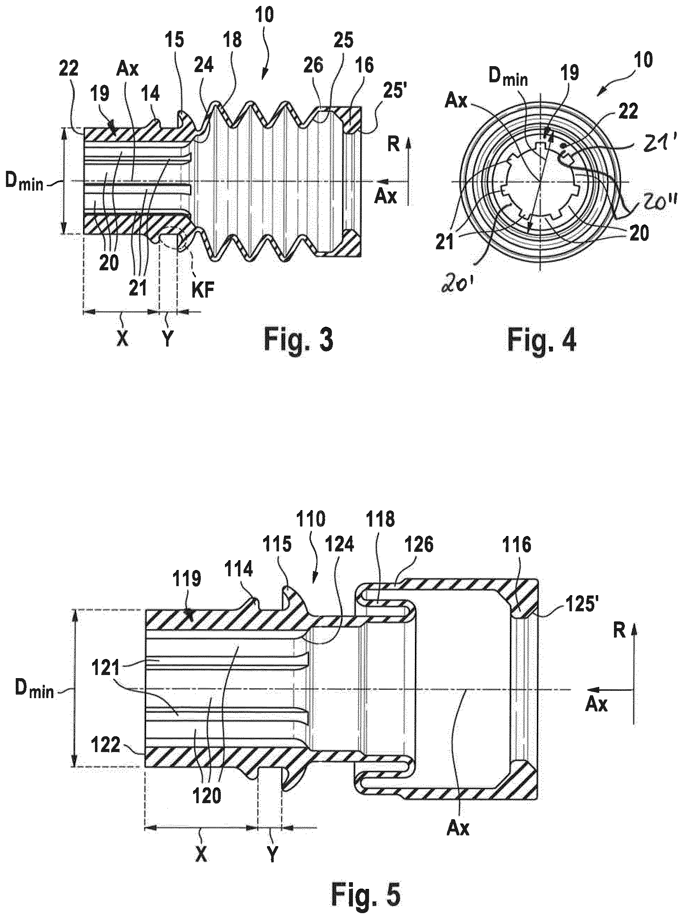

Zur Unterstützung von Tragfähigkeit, d.h. Stabilität (Feder-)Steifigkeit) einer ausgeführten Variante eines Führungssystems überwiegt ein wirksamer Traganteil zu Gunsten der Rippen 20,120. Demzufolge ist ein überwiegender flächenhafter Bolzenkontakt über die Rippenanlage ermöglicht d.h. Flächenpressungsbeanspruchung zwischen Bolzenoberfläche und Manschette 10,110 ist anhand erhöhtem positivem Traganteil minimiert. Umgekehrt ist der Anteil, welcher auf die Nuten entfällt, im Vergleich zum vorzugsweisen Rippenanteil mit deutlich weniger als 50 % darstellbar (vgl. beispielhafte anteilige Verteilung zwischen Rippen 20 und Nuten 21 wie anhand Fig. 4 erkennbar).

Für Bremssättel von Kraftfahrzeugbremsen ergibt sich weiterhin eine besonders zuverlässige Dämpfung bei ausreichender Stabilität, wenn die Führungseinrichtung sieben Nuten 20,120 und sieben Rippen 21,121 aufweist. Zwecks optimierter Spielreduktion ist in Ausgestaltung einer weiterentwickelten Variante eines Führungsabschnitts 19,119 eine Manschette 10,110 definiert, wobei diametral gegenüber zu einer Rippe 20,120 jeweils nicht mehr als eine einzige Nut 21,121 angeordnet ist, sowie umgekehrt.

Eine besonders zuverlässige Führung des Bremssattelgehäuse 5 gegenüber dem Bremshalter 4 bei federelastisch verbessert herstellbarer Rippengestaltung sich gemäß einer anderen vorteilhaften Weiterbildung der Erfindung gewährleisten, wenn eine Rippenkontaktoberfläche parallel, glatt und eben ist, wohingegen es sich empfiehlt , die Rippenflanken (d.h. an Rippenkontaktflächen angrenzende Flächen der Rippen ohne unmittelbaren Bolzenauflagekontakt) orthogonal senkrecht zur Oberfläche des Bolzens gestellt vorzusehen.

Ein zuverlässig fixierter Sitz der Manschette 10,110 lässt sich gemäß einer anderen vorteilhaften Weiterbildung der Erfindung sicherstellen, wenn die Balg-Manschette 10,110 mit passenden Schnittstellen jeweils an Bolzen 8 respektive Bremssattelgehäuse 5 und/oder Bremshalter 4 abgedichtet befestigt ist. Weiterhin ermöglicht diese Gestaltung eine staub- und flüssigkeitsdichte Abtrennung von der Umgebungsatmosphäre ("trockener Innenraum") des Faltenbalgs 18. Der gewonnene Faltenbalginnenraum zwischen Manschette und Bolzen könnte alternativ als ein zusätzliches Schmierstoffreservoir zur Verfügung stehen.

Ein zuverlässiger Sitz der Manschette 10,110 an dem Bolzen 8 lässt sich gemäß einer anderen vorteilhaften Weiterbildung der Erfindung sicherstellen, wenn die Manschette 10,110 über einen Sitz 16 mit gesonderter oder integrierter Verstärkung wie insbesondere über ein Ringelement verfügt. Beispielsweise darf ein Verstärkungsmittel/Ringelement von einem homogenen Elastomerwerkstoff der Manschette 10,110 umgeben sein. Sitz 16, Verstärkungsmittel/ Ringelement kann in diesem Zusammenhang beispielhaft formschlüssig in eine umlaufende Kavität, wie insbesondere in eine radial einwärts oder radial auswärts gerichtete Nut 17 eines Bolzens 8, eines Bremshalters und/oder eines Bremsgehäuses eingreifen sowie umgekehrt.

Die Fixierung der Balg-Manschette 10,110 bei gemischter unmittelbarer wie auch mittelbarer Bolzenführung gestaltet sich gemäß einer vorteilhaften Weiterbildung der Erfindung besonders einfach, wenn die Bohrung 9 im Bremshalter 4 als eine Stufenbohrung mit einem durchmessergroßen Abschnitt 11 zur mittelbaren Bolzenaufnahme d.h. mit Aufnahme des Führungsabschnitts 19,119 der Manschette 10,110 und mit einem durchmesserkleinen Abschnitt 12 zur unmittelbar direkten Bolzenaufnahmeführung im Bremshalter 4 ausgebildet ist. Das anteilig versetzte Arrangement bei versetzter Fixierung der Manschette 10,110 am Bremshalter 4 trägt zudem zur Dämpfung der Bauteile bei.

Die Manschette 10,110 ist gemäß einer anderen vorteilhaften Weiterbildung der Erfindung besonders einfach und zuverlässig mit dem Bremshalter 4 verbindbar, wenn der Führungsabschnitt 19,119 der Manschette 10,110 an seinem Außenumfang über einen in eine umlaufende Kavität 13 des Bremshalters 4 formschlüssig eindringenden Haltevorsprung 14 verfügt.

Bei einer darüber hinaus weiterentwickelt und besonders montageverbessert definierten Ausgestaltung der Erfindung ist der Führungsabschnitt 19, 119 der Manschette 10,110 ausgehend von dessen freien Ende 22; 122 am Außenumfang umlaufend, sowie über eine definierte Abschnittlänge X mit einem minimalen Außendurchmesser Dmin ausgestattet. Zumindest die Abschnittslänge X des minimalen Außendurchmesser Dmin ist im Wesentlichen zylindrisch bzw. weitgehend rohrförmig glatt - ohne Haltemittel - gestaltet vorgesehen. Durch diese weitgehend glatte rohrartige Ausgestaltung insbesondere des Endabschnitts über die Länge X des Führungsabschnitts 19,119 ist es ermöglicht, dass ein Einführmontagevorgang des Führungsabschnitts 19,119 in die Bohrung 9 selbstfindend also erleichtert, gewissermaßen "ungehemmt" ist. Ergo kann das Einführen ohne Gewalt mit einem vergleichsweise geringen Widerstand korrekt gepaart begonnen werden, und ohne auf die elastomere Manschette 10,110 übermäßig Montagedruck oder Deformation ausgeübt werden müsste, und wobei über den Endabschnitt eine quasiflächige Abdichtung am Außenumfang ermöglicht ist, so dass eine Axialdichtlippe rationalisiert ist. Mit anderen Worten ist es durch die dargestellte Schnittstellenausprägung insbesondere in Verbindung mit einer elastomer ausgebildeten, flexiblen Manschette 10,110 ermöglicht, dass eine konzentrische Komponentenzuordnung der zu paarenden Komponenten einjustiert sowie beim nachfolgenden Einführ- und Einpressvorgang sicher aufrecht erhalten bleibt, und ohne dass beispielsweise empfindliche Teile einer Manschette 10,110 beispielsweise durch scharfgratige Bohrungsabsätze oder anhand eines verkanteten Einpressvorgangs vorgeschädigt werden könnten. Das freie Ende 22,122 ist dabei ohne axiale Dichtlippe gestaltet sowie insbesondere vorteilhaft erleichtert, mit Freiraum 23, in der Bohrung 9 eingefügt aufgenommen. Mit Rationalisierung der Axialdichtlippe ergibt sich der erfindungsgemäße Vorteil, dass selbst mit einem maximal gelängtem Faltenbalg (maximales Verschleißteilmaß) keine Verschmutzung infolge reduzierter Axialdichtleistung zu befürchten ist.

Dem vorstehenden ist hinzuzufügen, dass weiterhin vorteilhafterweise ein Haltevorsprung 14 um eine Länge X axial rückversetzt von einem freien Ende des Führungsabschnitts 19,119 vorgesehen ist. Die relative Länge X ist dabei vergleichsweise deutlich kleiner ausgebildet als die vorstehend erläuterte Abschnittslänge Y. Zusammenfassend wird es mithin besonders intelligent ermöglicht, dass ein erhöhter Einpresswiderstand (Einpresskraftbedarf), welcher zur Fixierung der Manschette 10,110 am Bremshalter 4 aufzuwenden ist, erst zeitlich nachgeordnet also nach erfolgreicher Paarung zwischen Führungsabschnitt 19,119 und Bohrung 9 aufgewendet werden muss, was einen Montageprozess verbessert, weil eine verbesserte automatisierte Montagekontrolle ermöglicht ist, die zudem beispielhaft anhand einer vergleichsweise simplen Überwachung eines Einpresskraftbedarfs umsetzbar ist. Ein Kraftfluss KF zur Fixierung ist auf kurzem Wege über die Teillänge Y geschlossen, ohne dass die zur Dichtungsfixierung notwendigen Einspannkräfte über die Länge Y des Führungsabschnitts 19,119 geführt sind. Die Teillänge X ist bleibt demzufolge vom Kraftfluss KF der Fixierung entlastet. Demzufolge ist hiermit erfindungsgemäß auch eine besonders weiterentwickelte wie auch vorteilhafte Randbedingung zur Ermöglichung einer besonders sicheren wie insbesondere maschinengestützten, nämlich automatisierten, Manschettenmontage vorgeschlagen. Erfindungsgemäß erlaubt einer Manschette 10,110 - wie insbesondere deren besonderer Führungsabschnitt 19,119 - eine besonders vorteilhaft optimierte Unterscheidung/Aufgabenseparierung in Bezug auf Montage- und Fixierungsaufgaben auf der einen Seite und betriebliche Führungs- sowie Rückstellaufgaben auf der anderen Seite ermöglicht, so dass die dazu jeweils weitgehend gesondert und örtlich gegeneinander versetzt vorgesehenen Abschnitte, Merkmale, Mittel bzw. Teilaufgaben entkoppelt darstellbar sind.

Die Erfindung lässt zahlreiche Ausführungsformen zu. Zur weiteren Verdeutlichung ihres Grundprinzips sind zwei davon in der Zeichnung sinnbildhaft skizziert dargestellt und werden nachfolgend beschrieben. In der Zeichnung zeigt:
- Fig.1: eine Scheibenbremse 1 mit einer Führungseinrichtung 7 in einer Bremsbetätigungsstellung im Teilschnitt ohne Bremsscheibe und bei maximal zulässigem Verschleißzustand gemäß Ausführungsform,
- Fig.1a: zum Vergleich eine Scheibenbremse 1 wie in Fig. 1 mit neuwertigen Verschleißteilen (Bremsbeläge, ohne Bremsscheibe dargestellt),
- Fig.2: Teilausschnitt mit vergrößert skizzierter Führungseinrichtung 7 wie in Fig. 1,
- Fig. 2a: Führungsabschnitt 19 in Ausschnittvergrößerung eine einschubmontageoptimiert verbesserte Einspannfixierung zwischen Manschette 10 und Bremshalter 4 anhand Haltevorsprung 14 und Kragen 15 bei schematisch verdeutlichtem Kraftfluss KF,
- Fig.3: eine Manschette 10 im unverformten Zustand (Herstellungszustand),
- Fig.4: eine Seitenansicht der Manschette 10 in Fig. 3,
- Fig.5: eine Ausgestaltung einer Manschette 110 mit radial gefaltetem Faltenbalg.

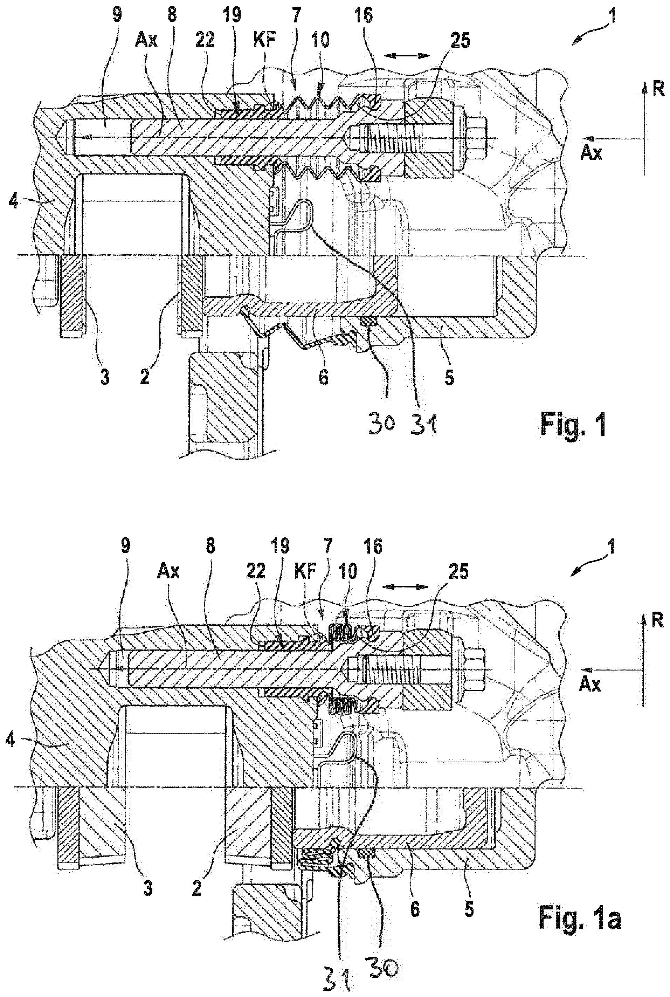

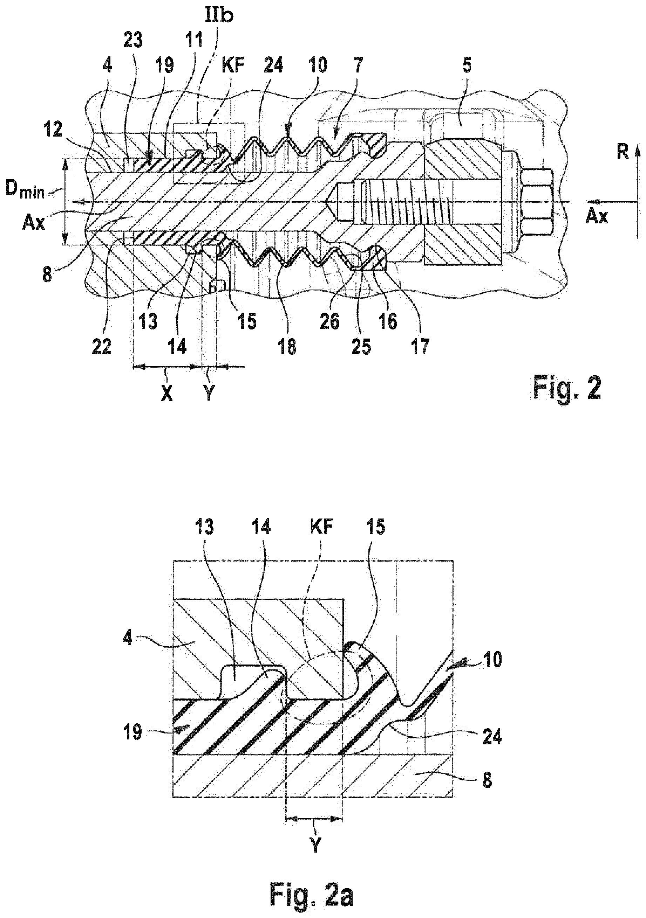

Fig. 1 zeigt eine Scheibenbremse 1 eines Kraftfahrzeugscheibenbremssystems mit Bremsbelägen 2, 3. Zwischen den Bremsbelägen 2,3 befindet sich im Fahrzeugfahrbetrieb bzw. im Bremsbetrieb eine drehbar gelagerte Bremsscheibe, welche aus Gründen der Übersichtlichkeit nicht dargestellt ist. Die Scheibenbremse 1 umfasst einen dreh- und fahrzeugfest gelagerten Bremshalter 4 und ein relativ zu dem Bremshalter 4 axial verschieblich geführt gelagertes Bremssattelgehäuse 5. Das Bremssattelgehäuse 5 verfügt über hydraulische oder sonstige Aktuatorik in Verbindung umfassend wenigstens ein axial verschiebbar gelagert geführtes Übertragungsorgan 6, das beispielsweise als ein hydraulischer Bremskolben gestaltet sein darf, zwecks direkter Betätigung eines Reibbelags 2. Ein Aktuatorantrieb der Kraftfahrzeugscheibenbremse 1 kann prinzipiell elektrisch, hydraulisch, pneumatisch, magnetisch oder beliebig kombiniert ausgebildet sein, wobei zwecks didaktischer Vereinfachung in Fig. 1 + 2 eine hydraulisch betätigte Stellaktuatorik skizziert ist.

Der Bremshalter 4 und das Bremssattelgehäuse 5 kooperieren zueinander relativ verschieblich über eine Führungseinrichtung 7 die zwei Bolzen 8 umfasst. Die gewählte Schnittebene wie in Fig. 1 - 3 zeigt zur vereinfachten Erläuterung jeweils nur eine von identisch gestalteten Bolzenführungen, nachdem sich die andere Bolzenführung ausserhalb der Zeichenebene im Abstand versetzt befindet. Der Bolzen 8 ist am oder im Bremssattelgehäuse 5 fixiert, nämlich insbesondere damit verschraubt und ist zumindest teilweise in einer Bohrung 9 im Bremshalter 4 (Stator) axial relativ verschiebbar geführt gelagert aufgenommen. Beide Bohrungen 9 des Führungssystems dürfen genauso wie die Bolzen 8 und Manschetten 10,110 zwecks Rationalisierung jeweils identisch ausgebildet sein. Eine vorzugsweise homogen aus einem Formgedächtniselastomer gefertigte Manschette 10,110 befindet sich einerseits am bewegbaren Bolzen 8 fixiert und andererseits am Bremshalter 4 fixiert gelagert. Die Manschette 10,110 umfasst einen Faltenbalg 18, und dient einer flexiblen Abdichtung eines längenveränderlichen Spalts bzw. Übergangs zwischen dem verschiebbaren Bolzen 8 und seiner Aufnahme am/im fahrzeugfesten Bremshalter 4, welcher zudem die Bremsbeläge 2,3 drehfest lagert (Bremsstator). Zwecks Bremsbetätigung wird mit Aktuatorik ein Übertragungsorgan 6 aus dem Bremssattelgehäuse 5 herausgefahren bis zunächst der direkt beaufschlagte Reibbelag 2 zur Reibanlage an die nicht gezeichnete Bremsscheibe gelangt. Die schraubzwingenartig folgende Einspannung der Bremsscheibe gemeinsam mit dem indirekt beaufschlagten Reibbelag 3 erfolgt infolge Reaktionsverlagerung des Bremssattelgehäuse 5 entgegen der Axialrichtung Ax. Ein Bremslöseprozess erfolgt umgekehrt. Demzufolge ist das Bremssattelgehäuse 5 zum Bremsen und zum Lösen der Kraftfahrzeugscheibenbremse in Relation zum Bremshalter 4 anhand der Führungseinrichtung 7 drehfest sowie axial verschiebbar gelagert geführt. Zur Verdeutlichung der relativen Verschieblichkeit des Bremssattelgehäuse 5 in Relation zu dem Bremshalter 4 ist dies in der Fig. mit einem Doppelpfeil gekennzeichnet.

Das Scheibenbremssystem 1 ist mit Fig. 1 in einer systemisch lageproportional entsprechend, gedachten Bremsbetriebsstellung unter der Voraussetzung eines maximal zulässigen Verschleissteilmasses betreffs maximalem Reibbelagverschleiß sowie Bremsscheibenverschleiß ergo maximal herausgefahrenem Übertragungsmittel 6 skizziert erläutert (Verschleißteile mit Lebensdauerende/Austauschpflichtig). Indem der maximal verschlissene Zustand der Verschleißteile vorliegt, befindet sich die Manschette 10 in Ihrem maximal gelängten, gestreckten, Betriebszustand. Fig. 1a zeigt zwecks Vergleichs das entsprechend unverschlissene lageentsprechende Arrangement nur in Verbindung mit neuwertigen, unverschlissenen Verschleißteilen.

Fig. 2 zeigt stark vergrößert eine Führungseinrichtung 7 wie in Fig. 1. Hierbei ist zu erkennen, dass die Bohrung 9 im Bremshalter 4 als einfache Stufenbohrung ausgebildet ist. Ein durchmessergroßer Abschnitt 11 der Bohrung 9 nimmt einen Führungsabschnitt 19 der Manschette 10 auf. Ein durchmesserkleiner Abschnitt 12 nimmt den Bolzen 8 auf. Die Manschette 10 verfügt einerseits über einen, radial nach außen weisenden, und in eine Kavität 13 des Bremshalters 4 eindringenden, Haltevorsprung 14. Jede Manschette 10,110 verfügt über einen elastischen Kragen 15 der mit Abstand Y zum Haltevorsprung 14 versetzt sowie von außenseitig am Bremshalters 4 aufsitzt und die Bohrung 9 abdichtet. Die besondere Schnittstellengestaltung zwischen Bremshalter 4 und Manschette 10,110 ermöglicht eine besondere Aufgabenteilung und ermöglicht mittels Kraftfluss KF eine besonders montagefreundliche Einschnapp-Fixierung, indem die Manschette 10,110 lediglich über die Teillänge y elastische Einspannkräfte erfährt, und ohne dass diese Halte-Einspannkräfte über die Teillänge Y des Führungsabschnitts 19 geführt sind. Demzufolge ist der Führungsabschnitt 19 zumindest über seine anteilige Länge X vom Fixierungskraftfluss KF entlastet ausgebildet, so dass die Länge X des Führungsabschnitts 19 im Wesentlichen ausschließlich zur Wahrnehmung der Rückstellaufgabe optimiert ist.

Ein bolzenseitiges Ende der Manschette 10,110 kann einen Sitz 16 zur Fixierung am Bolzen 8 ausbilden. Der Sitz 16 darf zwecks Stabilisierung aus Manschettenwerkstoff ringförmig aufgedickt ausgebildet sein und/oder insbesondere ein ringförmig gesondert wie auch anderweitig an- und/oder eingefügtes Ringelement zwecks Sitzversteifung aufweisen, und wobei der besagte Sitz 16 nach radial innen weisend in eine umlaufende Nut 17 des Bolzens 8 eingreift wie insbesondere elastomer eingeschnappt sein darf. Der Sitz 16 und der Führungsabschnitt 19 sind über einen elastisch zieharmonikaförmig deformierbar gestalteten Faltenbalg 18 miteinander verbunden. Dabei ist es in einer bevorzugten Ausgestaltung möglich dass die primäre Faltenbalganbindung 26 an den Sitz 16 nach radial innen konifiziert geneigt als Einführhilfe 25 abgeschrägt ausgebildet ist. Mit dieser oder einer vergleichbar äquivalent wirksamen Montage- + Einführverbesserungsmaßnahme wird es ermöglicht, dass ein axial gerichteter Einschubprozess eines Bolzens 8 effektiv erleichtert dargestellt ist, indem beispielsweise ein vorteilhafterweise abgerundet oder angefast ausgebildetes sowie mit gewisser Schrägstellung eingeführtes Bolzenende gewissermaßen automatisch auf einer integrierten sowie zugeordneten Einführschräge der Manschette 10,110 bauteilschonend abgleiten kann, ohne dass Fehlmontage, Einfädelung in eine Falte respektive irgendwelche Faltenbalgbeschädigung befürchtet werden muss. Störungen im Montageprozess bzw. unerwünschte Bolzenverkantung ist demzufolge durch eine besondere trichterartige Faltenbalganbindung konstruktiv ausgeschlossen oder zumindest minimiert.

Unabhängig davon, oder in beidseitiger Kombination wie beispielhaft nach dem bevorzugten Ausführungsbeispiel, ist es zwecks weiterentwickelter Montageverbesserung auch möglich, dass eine Einmündung eines Führungsabschnitts 19 stirnseitig mit einem entsprechend wirksamen, sowie insbesondere beispielhaft trichterartig konifiziert gestalteten, sukzessive verengt ausgebildeten, Bolzen-Zentrierabschnitt 24 aufweist.

Haltevorsprung 14 und Kragen 15 bzw. Sitz mit Ringelement 16 fixieren die Manschette 10 in ihrer vorgesehenen Position an Bremshalter 4 bzw. Bolzen 8. Der Bolzen 8 ist zylindrisch mit konstantem Durchmesser gestaltet. In einer nicht dargestellten Ausführungsform kann der Bolzen 8 in seinem dem Führungsabschnitt 19 gegenüberstehenden Teilbereich Abflachungen aufweisen.

Fig. 3 zeigt eine erste Ausführungsform der Manschette 10 aus Fig. 1 in einer Schnittdarstellung. Die Manschette 10 hat an der radial inneren Seite des Führungsabschnitts 19 mehrere parallel zur Achse des Bolzens 8 aus Fig. 1 angeordnete Rippen 20 und Nuten 21. Die Rippen 20 sind zumindest mit kontaktlosen Flanken orthogonal senkrecht zur Oberfläche des Bolzens 8 gerichtet wohingegen Bolzenkontaktoberflächen der Rippen 20 parallel, glatt, eben zum Bolzen 8 gestaltet sind, und nach Bolzeneinschub mit homogen gleichmäßig verteilter Flächenpressung/homogen verteilter Vorspannung eben + gleichmäßig auf der Bolzenkontaktoberfläche aufsitzen. Der Führungsabschnitt 19 ist im Verhältnis zum Faltenbalg 18 über die Länge x im Wesentlichen zylindrischrohrförmig glatt sowie verhältnismäßig dickwandig gestaltet, ohne Dichtlippe. Im Bereich der Länge y trägt der Führungsabschnitt 19 faltenbalgseitig an seiner Außenseite den Kragen 15 zwecks elastischer Anlage, Auflage, bzw. Abdichtung an einer Stirnseite des Bremshalter 4 sowie den distanziert und radial nach auswärts umlaufend vorstehenden Haltevorsprung 14. Am anderen Ende ihres Faltenbalgs 18 verfügt die Manschette 10,110 zwecks Fixierung wie nämlich als bolzenseitige Schnittstelle über einen Sitz 16, welcher über eine Verstärkungsmaßnahme wie insbesondere über ein Verstärkungselement, Ringelement o.ä. verfügen kann.

Fig. 4 zeigt in einer Seitenansicht eine Stirnseite einer Manschette 10, wie gemäß Fig. 3 und dadurch eine anteilige Aufteilung zwischen Rippen 20 und Nuten 21 im Führungsabschnitt 19. Hierbei ist mithin zu erkennen, dass die sieben Rippen 20 und sieben Nuten 21 einander abwechseln. Dabei ist die gemischte Paarung vorgesehen, indem zueinander diametral gegenüberliegend jeweils steht eine Rippe 20 und eine Nut 21 miteinander gepaart sind.

Fig. 5 verdeutlicht eine alternative Ausführungsform einer Manschette 110 in Verbindung mit alternativ angebundenem sowie gestaltetem Faltenbalg 118. Diese Manschette 110 unterscheidet sich dabei in Relation zur Variante nach Fig. 3 insbesondere dadurch, dass der Faltenbalg 118 zwecks elastischen Übergriffs zwischen Sitz 116 und Führungsabschnitt 119 gewissermaßen axial, insbesondere abschnittsweise achsparallel gewunden sowie in Radialrichtung R mäanderförmig geschichtet angeordnet sind. Im Übrigen und für die Schnittstellen bzw. Fixierung an benachbarten Komponenten wie auch für die Funktion gilt prinzipiell das zuvor in Bezug auf die erste Manschettenvariante dargelegte.

Die Erfindung eignet sich prinzipiell für sämtliche Radbremsapplikationen also insbesondere in Funktion als eine Betriebsscheibenbremse mit Anordnung an einer Vorderachse und/oder Hinterachse eines Kraftfahrzeugs wie auch in Verwendung als eine kombinierte Radbremse welche neben einer Betriebsbremsfunktion zusätzlich insbesondere beispielhaft die elektrische Feststellbremsfunktion incl. stromlos selbsthemmend arrangierter Feststellbremsaktuatorik (Stellvorrichtung) an oder in derselben Radbremskomponente integriert.

Obwohl bei den kombinierten Radbremsen eine Kombination von hydraulischer (Betriebsbrems-)Aktuatorik und elektromechanischer (Feststellbrems-)Aktuatorik denkbar, zielführend sowie sinnvoll erscheint, eignet sich die vorliegende Erfindung ganz besonders zur Darstellung einer Bremsbereitschaftsstellung für so genannte "dry-brake"-Radbremsen welche unter Verzicht auf Radbremshydraulik rein elektrische Bremsstellaktuatorik, ohne hydraulische Aktuatorik, definieren.

### Bezugszeichenliste

1 Kraftfahrzeugscheibenbremse
2 Reibbelag
3 Reibbelag
4 Bremshalter
5 Bremssattelgehäuse
6 Übertragungsorgan
7 Führungseinrichtung
8 Bolzen
9 Bohrung
10, 110 Manschette
11 Abschnitt (durchmessergroß)
12 Abschnitt (durchmesserklein)
13 Kavität
14 Haltevorsprung
15 Kragen
16,116 Sitz
17 Nut
18,118 Faltenbalg
19,119 Führungsabschnitt
20,20',120 Rippe
21,121 Nut
22,122 freies Ende
23 Freiraum
24,124 Bolzen-Einführ-Zentrierabschnitt
25,25', 125' Einführhilfe / bevorzugt Einführtrichter
26,126 Faltenbalganbindung
30 Elastomerdichtring (für Übertragungsorgan 6)
31 Rückstellfeder
KF Kraftfluss
X, Y Länge
Ax Axialrichtung-/Bolzen-/Manschettenachse (bei Fahrzeugmontage der Bremse ≙ parallel Raddrehachse arrangiert)
Dmin minimalen Außendurchmesser am Führungsabschnitt der Manschette R Radialrichtung

## Patentansprüche

1. Kraftfahrzeugscheibenbremse (1) mit einem Bremssattelgehäuse (5) aufweisend ein Übertragungsorgan (6), mit einem Bremshalter (4), mit einer Führungseinrichtung (7) zur axial verschieblichen Führung des Bremssattelgehäuse (5) am Bremshalter (4) und mit einem Bolzen (8) als Komponente der Führungseinrichtung (7), wobei der Bolzen (8) am Bremssattelgehäuse (5) fixiert ist und in einer Bohrung (9) im Bremshalter (4) über einen Führungsabschnitt axial verschiebbar gelagert geführt vorgesehen ist, wobei zur Spaltabdichtung zwischen Bolzen (8) und Bremshalter (4) eine Manschette (10, 110) mit einem Faltenbalg (18) vorgesehen ist, die Manschette (10, 110) über einen halterfest fixierten Führungsabschnitt (19,119) verfügt, welcher am Bolzen (8) kraftschlüssig angreift, und wobei die Manschette (10,110) derart zwischen Bremshalter (4) und Bremssattelgehäuse (5) angeordnet ist, so dass die Manschette (10,110) über den Führungsabschnitt (19,119) zum automatischen Rückstellen mittels relativer Verschiebung zwischen Bremssattelgehäuse (5) und Bremshalter (4) geeignet und bestimmt ist, **dadurch**
**gekennzeichnet , dass** die Manschette (10,110) zwecks Erzeugung eines zusätzlichen Rückstellkraftanteils anhand eines definierten Balgabschnitts mit definierter Federsteifigkeit zwischen Bolzen (8) und Bremshalter (4) elastisch deformierbar eingespannt ist, und wobei ein vorzugsweise zick-zack-förmig gefalteter Faltenbalg (18,118) eine definierte elastische Balgrückverformung ermöglicht.

2. Kraftfahrzeugscheibenbremse (1) nach Anspruch 1, **dadurch**
**gekennzeichnet , dass** die Manschette (10, 110) zur automatischen Erzeugung einer Rückstellkraft aus Elastomer gefertigt ist, die Rückstellkraft über den Führungsabschnitt (19,119) mit Rippen (20) auf den Bolzen (8) übertragen wird, und die Manschette (10,110) über eine definierte Federsteifigkeit des Elastomers verfügt.

3. Kraftfahrzeugscheibenbremse (1) nach einem oder mehreren der vorhergehenden Ansprüche 1, 2, **dadurch**
**gekennzeichnet, dass** der Führungsabschnitt (19,119) über eine Länge X + Y weitgehend vollständig durchgehende Flächenkontaktanlage zwischen mindestens einer Rippe (20,120) und dem Bolzen (8) definiert.

4. Kraftfahrzeugscheibenbremse (1) nach einem oder mehreren der Ansprüche 1 - 3, **dadurch gekennzeichnet , dass** der Führungsabschnitt (19,119) abwechselnd arrangierte Rippen (20,120) und Nuten (21,121) aufweist, dass die Rippen (20,120) glatt sowie parallel gerichtet auf einer Umfangsfläche des Bolzens (8) aufsitzen, und dass Rippen (20,120) sowie Nuten (21,121) jeweils parallel zu einer Achse Ax des Bolzens (8) gestreckt angeordnet sind.

5. Kraftfahrzeugscheibenbremse (1) nach einem oder mehreren der vorhergehenden Ansprüche, **dadurch gekennzeichnet , dass** Rippen (20,120) und Nuten (21,121) der Manschette (10,110) derart konfiguriert sind, dass durch deren Bolzenauflage im Wechsel zwischen Bremsbetätigung und Bremslösen wechselweise Druck und Sog anhand Mikrodeformation und Mikrorückverformung bei automatischer Schmierstoffpumpenfunktion bewirkt, um geschmierten Bolzenkontakt, Schmierstoffverteilung und/oder Schmierstoffzirkulation zu ermöglichen.

6. Kraftfahrzeugscheibenbremse (1) nach einem oder mehreren der vorhergehenden Ansprüche, **dadurch gekennzeichnet , dass** diametral gegenüberliegend zu jeweils einer Rippe (20,120) nicht mehr als eine Nut (21,121) angeordnet ist, sowie umgekehrt.

7. Kraftfahrzeugscheibenbremse (1) nach einem oder mehreren der vorhergehenden Ansprüche, **dadurch gekennzeichnet , dass** diametral gegenüberliegend zu jeweils einer Rippe (20') jeweils eine Nut (21') platziert ist, welche Nut (21') zentrisch zwischen zwei flankierenden Rippenabschnitten (20") arrangiert ist.

8. Kraftfahrzeugscheibenbremse (1) nach einem oder mehreren der vorhergehenden Ansprüche, **dadurch gekennzeichnet , dass** ein flächenmäßiger Anteil von lasttragenden Rippen (20,120) anhand Auflage auf dem Bolzen (8) überwiegt, im Vergleich zu einem Anteil von nicht lasttragenden Nuten (21,121).

9. Kraftfahrzeugscheibenbremse (1) nach einem oder mehreren der vorhergehenden Ansprüche, **dadurch gekennzeichnet , dass** der Führungsabschnitt (19,119) der Manschette (10,110) über eine jeweils ungerade Anzahl von Nuten (21, 121) und über eine ungerade Anzahl von Rippen (20, 120) verfügt.

10. Kraftfahrzeugscheibenbremse (1) nach einem oder mehreren der vorhergehenden Ansprüche, **dadurch gekennzeichnet , dass** der Führungsabschnitt (19,119) der Manschette (10,110) sieben Nuten (21,121) und sieben Rippen (20,120) aufweist.

11. Kraftfahrzeugscheibenbremse (1) nach einem oder mehreren der vorhergehenden Ansprüche, **dadurch gekennzeichnet , dass** die Manschette (10, 110) zwecks Fixierung und/oder Abdichtung über wenigstens einen Sitz (16,116) mit bevorzugt wenigstens einem Verstärkungsmittel verfügt, wobei der Sitz (16,116) mit Verstärkungsmittel ringförmig ausgebildet ist, und dass es bevorzugt in einer umlaufenden Nut (17) des Bolzens (8) platziert angeordnet ist.

12. Kraftfahrzeugscheibenbremse (1) nach einem oder mehreren der vorhergehenden Ansprüche, **dadurch gekennzeichnet , dass** eine Bohrung (9) im Bremshalter (4) als eine Stufenbohrung mit einem ersten durchmessergroßen Abschnitt (11) zur anteiligen mittelbaren Bolzenführung über den Führungsabschnitt (19, 119) der Manschette (10, 110) vorgesehen ist, und wobei ein zweiter durchmesserkleiner Abschnitt (12) vorgesehen ist, der zur anteiligen und unmittelbaren Bolzenführung im Bremshalter (4) dient.

13. Kraftfahrzeugscheibenbremse (1) nach einem oder mehreren der vorhergehenden Ansprüche, **dadurch gekennzeichnet , dass** der Führungsabschnitt (19, 119) der Manschette (10, 110) an seinem radial äußeren Umfang über einen Haltevorsprung (14,114) verfügt, welcher für einen formschlüssigen Eingriff in eine Kavität (13) des Bremshalters (4) geeignet und bestimmt ist, wobei der Führungsabschnitt (19, 119) der Manschette (10,110) frontseitig sowie ausgehend von dessen freien Ende (22; 122) an seinem Außenumfang umlaufend, sowie über eine definierte Abschnittlänge X glatt, mit einem minimalen Außendurchmesser Dmin, ohne Haltevorsprung (14), einsteckmontagegerecht ausgebildet ist.

14. Kraftfahrzeugscheibenbremse (1) nach einem oder mehreren der vorhergehenden Ansprüche, **dadurch gekennzeichnet , dass** der Führungsabschnitt (19,119) über eine Abschnittlänge X umlaufend hinterschneidungsfrei als eine radial auswärts gerichtete zylindrische Dichtfläche ausgebildet ist, so dass Abdichtung für einfache Einsteck- + Einrastmontagefixierung im Bremshalter (4) vorliegt.

15. Kraftfahrzeugscheibenbremse (1) nach einem oder mehreren der vorhergehenden Ansprüche, **dadurch gekennzeichnet , dass** der Haltevorsprung (14,114) des Führungsabschnitts (19,119), ausgehend von dessen freien Ende, um eine Länge X rückversetzt vorgesehen ist, so dass eine Einsteck-Fixierung der Balg-Manschette mittels elastischer Verspannung über die Länge Y vorliegt.

16. Kraftfahrzeugscheibenbremse (1) nach einem oder mehreren der vorhergehenden Ansprüche, **dadurch gekennzeichnet , dass** der Führungsabschnitt (19,119) derart vorliegt, dass eine Länge X größer als eine Länge y ausgebildet ist.

17. Kraftfahrzeugscheibenbremse (1) nach einem oder mehreren der vorhergehenden Ansprüche, **dadurch gekennzeichnet , dass** ein freies Ende (22,122) der Manschette (10,110) ohne Dichtlippe ausgebildet, sowie mit Freiraum (23) in der Bohrung (9) aufgenommen, ist.

18. Kraftfahrzeugscheibenbremse (1) nach einem oder mehreren der vorhergehenden Ansprüche, **dadurch gekennzeichnet , dass** eine Einspannung mit innerem Kraftfluss KF zwecks Einspannfixierung der Manschette (10,110) im Bremshalter (4) derart über eine Einschublänge Länge Y zwischen Haltevorsprung (14,114) und Kragen (15,115) geschlossen ist, so dass der Führungsabschnitts (19,119) über eine Einschublänge Länge X ohne Einspannkraftfluss KF vorliegt.

19. Kraftfahrzeugscheibenbremse (1) nach einem oder mehreren der vorhergehenden Ansprüche, **dadurch gekennzeichnet , dass** die Manschette (10,110) im Bereich einer Mündung eines Führungsabschnitts (19,119), insbesondere faltenbalgseitig, einen integrierten Bolzen-Zentrierabschnitt (24,124) aufweist.

20. Kraftfahrzeugscheibenbremse (1) nach einem oder mehreren der vorhergehenden Ansprüche, **dadurch gekennzeichnet , dass** die Manschette (10,110) insbesondere an und/oder angrenzend an einen Sitz (16,116), wie insbesondere im Bereich einer Faltenbalganbindung (26,126), über eine integrierte Einführhilfe (25,25',125") verfügt.

## Claims

1. A motor vehicle disk brake (1), comprising a brake calliper housing (5) having a transmission member (6), with a brake holder (4), with a guide device (7) for axially displaceably guiding the brake calliper housing (5) on the brake holder (4), and comprising a bolt (8) as a component of the guide device (7), wherein the bolt (8) is fixed to the brake calliper housing (5) and is provided in a manner guided and mounted axially displaceably in a bore (9) in the brake holder (4) via a guide section, wherein a sleeve (10, 110) with a bellows (18) is provided for sealing the gap between the bolt (8) and brake holder (4), the sleeve (10, 110) has a guide section (19, 119) which is fixed to the holder and acts on the bolt (8) in a force-fitting manner, and wherein the sleeve (10, 110) is arranged between the brake holder (4) and the brake calliper housing (5) in such a way that the sleeve (10, 110) via the guide section (19, 119) is suitable and intended to be automatically restored by means of relative displacement between the brake calliper housing (5) and the brake holder (4), **characterized in that** the sleeve (10, 110) is clamped elastically deformably with a defined spring stiffness between the bolt (8) and brake holder (4) in order to generate an additional restoring force portion on the basis of a defined bellows section, and wherein a bellows (18, 118) which is preferably folded in a zigzag-shaped manner permits a defined elastic reverse deformation of the bellows.

2. The motor vehicle disk brake (1) as claimed in claim 1, **characterized in that** the sleeve (10, 110) is manufactured from elastomer to automatically generate a restoring force, the restoring force is transmitted to the bolt (8) by ribs (20) via the guide section (19, 119), and the sleeve (10, 110) has a defined spring stiffness of the elastomer.

3. The motor vehicle disk brake (1) as claimed in one or more of the preceding claims 1, 2, **characterized in that** the guide section (19, 119) defines a substantially completely continuous surface contact between at least one rib (20, 120) and the bolt (8) over a length X + Y.

4. The motor vehicle disk brake (1) as claimed in one or more of claims 1 - 3, **characterized in that** the guide section (19, 119) has alternately arranged ribs (20, 120) and grooves (21, 121), **in that** the ribs (20, 120) sit smoothly and directed in parallel on a circumferential surface of the bolt (8), and **in that** ribs (20, 120) and grooves (21, 121) each extend parallel to an axis Ax of the bolt (8).

5. The motor vehicle disk brake (1) as claimed in one or more of the preceding claims, **characterized in that** ribs (20, 120) and grooves (21, 121) of the sleeve (10, 110) are configured in such a way that the bolt support thereof in the alternation between brake actuation and brake release alternately causes pressure and suction by means of micro deformation and micro reverse deformation during an automatic lubricant pump operation, in order to permit lubricated bolt contact, lubricant distribution and/or lubricant circulation.

6. The motor vehicle disk brake (1) as claimed in one or more of the preceding claims, **characterized in that** no more than one groove (21, 121) is arranged diametrically opposite each rib (20, 120), and vice versa.

7. The motor vehicle disk brake (1) as claimed in one or more of the preceding claims, **characterized in that** one groove (21') is placed diametrically opposite each rib (20'), said groove (21') being arranged centrally between two flanking rib sections (20").

8. The motor vehicle disk brake (1) as claimed in one or more of the preceding claims, **characterized in that,** with reference to the support on the bolt (8), an areal proportion of load-bearing ribs (20, 120) predominates, compared to a proportion of non-load-bearing grooves (21, 121).

9. The motor vehicle disk brake (1) as claimed in one or more of the preceding claims, **characterized in that** the guide section (19, 119) of the sleeve (10, 110) has an odd number of grooves (21, 121) and an odd number of ribs (20, 120).

10. The motor vehicle disk brake (1) as claimed in one or more of the preceding claims, **characterized in that** the guide section (19, 119) of the sleeve (10, 110) has seven grooves (21, 121) and seven ribs (20, 120).

11. The motor vehicle disk brake (1) as claimed in one or more of the preceding claims, **characterized in that** the sleeve (10, 110) has at least one seat (16, 116) with preferably at least one reinforcing means for fixing and/or sealing purposes, wherein the seat (16, 116) together with reinforcing means is annular, and preferably placed in a circumferential groove (17) of the bolt (8).

12. The motor vehicle disk brake (1) as claimed in one or more of the preceding claims, **characterized in that** a bore (9) in the brake holder (4) is provided as a stepped bore having a first section (11) of large diameter for the proportional indirect guiding of the bolt via the guide section (19, 119) of the sleeve (10, 110), and wherein a second section (12) of small diameter is provided, which serves for the proportional and direct guiding of the bolt in the brake holder (4).

13. The motor vehicle disk brake (1) as claimed in one or more of the preceding claims, **characterized in that** the guide section (19, 119) of the sleeve (10, 110) has, on its radially outer circumference, a holding projection (14, 114) which is suitable and intended for form-fitting engagement in a cavity (13) of the brake holder (4), wherein the guide section (19, 119) of the sleeve (10, 110) is formed smoothly on the front side and circumferentially on its outer circumference starting from its free end (22; 122) and also over a defined section length X, with a minimum outer diameter Dmin without a holding projection (14), in a manner appropriate for plugging-in installation.

14. The motor vehicle disk brake (1) as claimed in one or more of the preceding claims, **characterized in that** the guide section (19, 119) is in the form of a radially outwardly directed cylindrical sealing surface over a section length X circumferentially in a manner free from undercuts such that sealing is provided for simple plugging-in + latching installation fixing in the brake holder (4).

15. The motor vehicle disk brake (1) as claimed in one or more of the preceding claims, **characterized in that** the holding projection (14, 114) of the guide section (19, 119), starting from its free end, is provided offset back by a length X such that plugging-in fixing of the bellows sleeve over the length Y by means of elastic bracing is provided.

16. The motor vehicle disk brake (1) as claimed in one or more of the preceding claims, **characterized in that** the guide section (19, 119) is provided in such a way that a length X is larger than a length y.

17. The motor vehicle disk brake (1) as claimed in one or more of the preceding claims, **characterized in that** a free end (22, 122) of the sleeve (10, 110) is formed without a sealing lip, and is received in the bore (9) with a clearance (23).

18. The motor vehicle disk brake (1) as claimed in one or more of the preceding claims, **characterized in that** clamping with an internal force flux KF for the purpose of fixing the sleeve (10, 110) in the brake holder (4) by clamping is closed over an insertion length, length Y, between the holding projection (14, 114) and collar (15, 115) in such a way that the guide section (19, 119) is provided without a clamping force flux KF over an insertion length, length X.

19. The motor vehicle disk brake (1) as claimed in one or more of the preceding claims, **characterized in that** the sleeve (10, 110) in the region of a mouth of a guide section (19, 119), in particular on the bellows side, has an integrated bolt centring section (24, 124).

20. The motor vehicle disk brake (1) as claimed in one or more of the preceding claims, **characterized in that** the sleeve (10, 110) in particular at and/or adjacent to a seat (16, 116), such as in particular in the region of a bellows connection (26, 126), has an integrated insertion aid (25, 25', 125").

## Revendications

1. Frein à disque automobile (1) comportant un boîtier d'étrier de frein (5) présentant un organe de transmission (6), comportant un support de frein (4), comportant un guide (7) pour le guidage axialement déplaçable du boîtier d'étrier de frein (5) sur le support de frein (4) et comportant un boulon (8) faisant partie du guide (7), dans lequel le boulon (8) est fixé au boîtier d'étrier de frein (5) et est prévu dans un alésage (9) dans le support de frein (4) par l'intermédiaire d'une section de guidage de manière à être axialement déplaçable, dans lequel une botte (10, 110) avec un soufflet (18) est prévue pour sceller l'espace entre le boulon (8) et le support de frein (4), la botte (10, 110) dispose d'une section de guidage (19, 119) fixée au support, qui met en prise le boulon (8) par adhérence, et dans lequel la botte (10, 110) est disposée entre le support de frein (4) et le boîtier d'étrier de frein (5) de sorte que la botte (10, 110) est adaptée et destinée à une réinitialisation automatique par l'intermédiaire de la section de guidage (19, 119) au moyen d'un déplacement relatif entre le boîtier d'étrier de frein (5) et le support de frein (4), **caractérisé en ce que** la botte (10, 110) est serrée de manière élastiquement déformable entre le boulon (8) et le support de frein (4) au moyen d'une section de soufflet définie ayant une rigidité de ressort définie afin de générer une part de force de rappel supplémentaire, et dans lequel un soufflet (18, 118) plié de préférence en zigzag permet une récupération élastique définie du soufflet.

2. Frein à disque automobile (1) selon la revendication 1, **caractérisé en ce que** la botte (10, 110) est fabriquée en élastomère pour la génération automatique d'une force de rappel, la force de rappel est transmise au boulon (8) par l'intermédiaire de la section de guidage (19, 119) avec des nervures (20), et la botte (10, 110) dispose d'une rigidité de ressort définie de l'élastomère.

3. Frein à disque automobile (1) selon une ou plusieurs des revendications précédentes 1, 2, **caractérisé en ce que** la section de guidage (19, 119) définit, sur une longueur X + Y, une installation de contact de surface pratiquement entièrement continue entre au moins une nervure (20, 120) et le boulon (8).

4. Frein à disque automobile (1) selon une ou plusieurs des revendications 1 à 3, **caractérisé en ce que** la section de guidage (19, 119) présente des nervures (20, 120) et des rainures (21, 121) disposées en alternance, **en ce que** les nervures (20, 120) reposent de manière lisse et parallèle sur une surface périphérique du boulon (8), et **en ce que** les nervures (20, 120) et les rainures (21, 121) sont chacune disposées de manière étirée parallèlement à un axe Ax du boulon (8).

5. Frein à disque automobile (1) selon une ou plusieurs des revendications précédentes, **caractérisé en ce que** des nervures (20, 120) et des rainures (21, 121) de la botte (10, 110) sont configurées de sorte qu'en raison de leur appui sur le boulon lors de l'alternance entre l'actionnement et le relâchement du frein, une pression et une aspiration alternées sont générées par microdéformation et microrécupération avec fonction de pompe automatique de lubrifiant afin de permettre un contact lubrifié du boulon, une répartition du lubrifiant et/ou une circulation de celui-ci.

6. Frein à disque automobile (1) selon une ou plusieurs des revendications précédentes, **caractérisé en ce qu'**une rainure (21, 121) tout au plus est disposée diamétralement en face de chaque nervure (20, 120), et vice versa.

7. Frein à disque automobile (1) selon une ou plusieurs des revendications précédentes, **caractérisé en ce que** chaque rainure (21') est placée de manière diamétralement opposée à une nervure (20'), laquelle rainure (21') est disposée de manière centrée entre deux sections de nervures flanquantes (20'').

8. Frein à disque automobile (1) selon une ou plusieurs des revendications précédentes, **caractérisé en ce qu'une** part en surface de nervures (20, 120) portant la charge prédomine à l'aide d'un appui sur le boulon (8), par rapport à une part de rainures (21, 121) ne portant pas la charge.

9. Frein à disque automobile (1) selon une ou plusieurs des revendications précédentes, **caractérisé en ce que** la section de guidage (19, 119) de la botte (10, 110) dispose d'un nombre impair de rainures (21, 121) et d'un nombre impair de nervures (20, 120).

10. Frein à disque automobile (1) selon une ou plusieurs des revendications précédentes, **caractérisé en ce que** la section de guidage (19, 119) de la botte (10, 110) présente sept rainures (21,121) et sept nervures (20,120).

11. Frein à disque automobile (1) selon une ou plusieurs des revendications précédentes, **caractérisé en ce que** la botte (10, 110) dispose, pour la fixation et/ou l'étanchéité, d'au moins un siège (16, 116) avec de préférence au moins un moyen de renforcement, dans lequel le siège (16, 116) avec le moyen de renforcement est réalisé en forme d'anneau, et **en ce qu'**il est disposé de préférence dans une rainure périphérique (17) du boulon (8).

12. Frein à disque automobile (1) selon une ou plusieurs des revendications précédentes, **caractérisé en ce qu'**un alésage (9) dans le support de frein (4) est prévu comme alésage étagé avec une première section de grand diamètre (11) pour le guidage indirect partiel du boulon sur la section de guidage (19, 119) de la botte (10, 110), et dans lequel une seconde section de petit diamètre (12) est prévue pour le guidage partiel et direct du boulon dans le support de frein (4).

13. Frein à disque automobile (1) selon une ou plusieurs des revendications précédentes, **caractérisé en ce que** la section de guidage (19, 119) de la botte (10, 110) dispose, sur sa circonférence radialement extérieure, d'une saillie de retenue (14, 114) qui est adaptée et destinée à une prise par complémentarité de forme dans une cavité (13) du support de frein (4), dans lequel la section de guidage (19, 119) de la botte (10, 110) est conçue pour être montée par enfichage sur le côté avant et à partir de son extrémité libre (22 ; 122) circonférentiellement sur son pourtour extérieur, ainsi que pour être lisse sur une longueur de section définie X, avec un diamètre extérieur minimal Dmin, sans saillie de retenue (14).

14. Frein à disque automobile (1) selon une ou plusieurs des revendications précédentes, **caractérisé en ce que** la section de guidage (19, 119) est conçue comme une surface d'étanchéité cylindrique dirigée radialement vers l'extérieur sur une longueur de section X circonférentiellement sans contre-dépouilles, de sorte qu'une étanchéité est assurée pour une fixation simple par assemblage par enfichage + encliquetage dans le support de frein (4).

15. Frein à disque automobile (1) selon une ou plusieurs des revendications précédentes, **caractérisé en ce que** la saillie de retenue (14, 114) du segment de guidage (19, 119) est prévue de manière décalée en arrière d'une longueur X à partir de son extrémité libre, de sorte qu'il existe une fixation enfichable de la botte à soufflet au moyen d'une contrainte élastique sur la longueur Y.

16. Frein à disque automobile (1) selon une ou plusieurs des revendications précédentes, **caractérisé en ce que** la section de guidage (19, 119) est présente de sorte qu'une longueur X est supérieure à une longueur y.

17. Frein à disque automobile (1) selon une ou plusieurs des revendications précédentes, **caractérisé en ce qu'**une extrémité libre (22, 122) de la botte (10, 110) est réalisée sans lèvre d'étanchéité et reçue avec un espace libre (23) dans l'alésage (9).

18. Frein à disque automobile (1) selon une ou plusieurs des revendications précédentes, **caractérisé en ce qu'**un serrage avec un flux de force interne KF pour la fixation par serrage de la botte (10, 110) dans le support de frein (4) est fermé sur une longueur d'insertion Y entre la saillie de retenue (14, 114) et la collerette (15, 115) de sorte que la section de guidage (19, 119) se trouve sur une longueur d'insertion X sans flux de force de serrage KF.

19. Frein à disque automobile (1) selon une ou plusieurs des revendications précédentes, **caractérisé en ce que** la botte (10, 110) présente, dans la zone d'une embouchure d'une section de guidage (19, 119), en particulier côté soufflet, un segment de centrage de boulon intégré (24, 124).

20. Frein à disque automobile (1) selon une ou plusieurs des revendications précédentes, **caractérisé en ce que** la botte (10, 110) dispose en particulier au niveau et/ou à proximité d'un siège (16, 116), comme en particulier au niveau d'une liaison à soufflet (26, 126), d'une aide à l'insertion intégrée (25, 25', 125'').
